# DEMANDE DE BREVET EUROPEEN

(11) **EP 1 565 014 A1**
(43) Date de publication de la demande: **17.08.2005**
(21) Numéro de dépôt: 05290280.6
(22) Date de dépôt: 08.02.2005
(51) Int. Cl.: H04Q 7/30

(54) **Transport de parole compressée en mode paquet dans le reséau coeur d'infrastructures de communication avec des mobiles**

(30) Priorité: 12.02.2004 FR 0450252
(71) Demandeur: ALCATEL, 75008 Paris (FR)
(72) Inventeur: Bultinck, Alain, 91310 Longpont/Orge (FR); Calu, Serge, 22560 Pleumeur Bodou (FR)
(74) Mandataire: El Manouni, Josiane

(57) **Abrégé**

Un des objets de la présente invention est un procédé pour le transport de parole compressée en mode paquet dans le réseau coeur d'infrastructures de communication avec des mobiles, sur un segment de réseau coeur incluant une paire de transcodeurs équipés pour fonctionner selon un mode dit sans double transcodage perrmettant de transporter de la parole compressée sur ledit segment, lesdits transcodeurs étant prévus pour mettre la parole compressée dans un format dit premier format incluant des données de parole compressée et des données de parole non compressée, procédé dans lequel, pour un transport optimisé en mode paquet sur tout ou partie dudit segment, ledit premier format est changé en un deuxième format incluant seulement des données de parole compressée.

## Description

La présente invention concerne d'une manière générale les infrastructures de communication avec des mobiles.

D'une manière générale, ces infrastructures font l'objet de normalisation, et pour plus d'informations on pourra se reporter aux normes correspondantes, publiées par les organismes de normalisation correspondants.

D'une manière générale, un réseau de communications mobiles (ou PLMN, pour « Public Land Mobile Network ») comporte un réseau d'accès radio (ou RAN, pour « Radio Access Network ») chargé principalement de la transmission et de la gestion des ressources radio sur l'interface radio entre le réseau et des terminaux mobiles, et un réseau coeur (ou CN, pour « Core Network ») chargé principalement du routage et de la gestion de communications. Ces communications peuvent notamment être des comunications avec des terminaux mobiles du même PLMN (le routage étant alors interne à ce PLMN), ou avec des terminaux mobiles d'autres PLMNs (le routage s'effectuant alors via un ou plusieurs réseaux de transit). Le réseau coeur d'infrastructures de communication avec des mobiles inclut ainsi le réseau coeur d'un ou plusieurs PLMNs, et un ou plusieurs réseaux de transit.

Les évolutions des besoins et des technologies conduisent généralement à distinguer différents types de systèmes de communications mobiles, notamment des systèmes de deuxième génération et des systèmes de troisième génération. Un exemple typique de système de deuxième génération est le GSM (« Global System for Mobile communication »). Un exemple typique de système de troisième génération est l'UMTS (« Universal Mobile Telecommunication System »).

En outre, les évolutions des besoins et des technologies conduisent généralement à distinguer différentes technologies, telles que notamment les technologies orientées circuit et les technologies orientées paquet.

En outre, les évolutions des besoins et de la technologie conduisent généralement à distinguer des versions successives de la norme, notamment:
- une première version (appelée aussi R3, ou R99) dans laquelle les changements les plus importants par rapport aux systèmes de deuxième génération tels que le GSM concernent l'introduction de nouvelles technologies d'accès radio, et le réseau coeur utilise autant que possible les infrastructures existantes de deuxième génération,
- les versions suivantes, à partir d'une version appelée aussi R4, dans laquelle les changements les plus importants concernent le domaine circuit du réseau coeur, avec l'introduction de la technologie paquet comme technologie de transport, et la séparation du flux de données utilisateur et des données de contrôle.

Un problème général dans ces systèmes, dans le cas de données utilisateur correspondant à de la parole, est d'utiliser efficacement les ressources de transport disponibles, sans dégrader la qualite de la parole.

Différentes techniques de codage ont été développées permettant d'obtenir de la parole sous une forme compressée optimisée pour sa transmission sur l'interface radio. Ainsi, dans les systèmes tels que le GSM et l'UMTS, différents modes de codage ont été définis, tels que, pour le GSM, les modes FR (« Full Rate »), HR (« Half Rate »), EFR (« Enhanced Full Rate »), et, pour le GSM et l'UMTS, le mode AMR (« Adoptive Multi-Rate »).

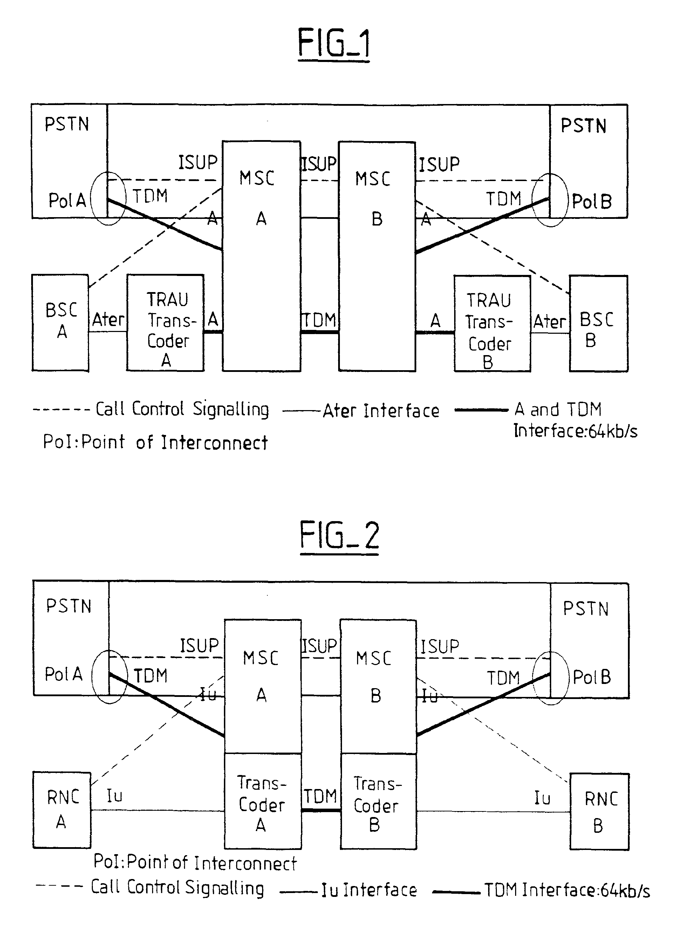

Dans les versions de la norme antérieures à la version R4, le codage de la parole pour sa transmission dans le réseau coeur utilise la technique PCM (pour « Pulse Code Modulation »), telle que définie notamment dans la recommendation ITU-T G.711, permettant de transporter de la parole non compressée sous forme d'échantillons codés à 64 kbit/s. Des équipements appelés transcodeurs (ou TRAU, pour « Transcoder Rate Adaptation Unit ») sont alors prévus pour passer de la parole compressée optimisée pour sa transmission sur l'interface radio, à la parole codée suivant le codage PCM, comme rappelé sur la figure 1 (pour le GSM par exemple) et sur la figure 2 (pour l'UMTS par exemple), ces figures étant en l'occurrence reprises du document 3GPP TR 23.977 publié par le 3GPP (« 3rd Generation Partnership Project »).

On rappelle que dans un système tel que le GSM par exemple, des transcodeurs ou TRAU sont prévus entre des éléments de réseau d'accès radio appelés BSC (pour « Base Station Controller ») et des éléments de réseau coeur appelés MSC (pour « Mobile Switching Center »), l'interface entre BSC et TRAU étant appelée interface « Ater », et l'interface entre TRAU et MSC étant appelée interface «A».

Or rappelle que, dans un système tel que l'UMTS par exemple, des transcodeurs sont prévus au niveau des éléments de réseau coeur appelés MSC (pour « Mobile Switching Center »), l'interface entre éléments de réseau d'accès radio appelés RNC (pour « Radio Network Controller ») et transcodeurs étant appelée interface « lu ».

Comme rappelé sur les figures 1 et 2, dans des systèmes tels que le GSM et l'UMTS par exemple, pour des versions de la norme antérieures à la version R4, la technologie de transport utilisée dans le réseau coeur (par exemple entre les MSC notés « MSC A » et « MSC B ») est une technologie orientée circuit, en l'occurrence la technologie TDM (« Time Division Multiplexing ») basée sur un multiplexage temporel de canaux ou échantillons PCM codés à 64 kbit/s.

Un mode dit sans double transcodage (ou TFO, pour « Tandem Free Operation » en anglais) a en outre été défini, pour éviter un double transcodage dans le cas de communication de mobile à mobile, afin d'éviter une dégradation de qualité de la parole.

Le mode TFO est activé par la mise en oeuvre, entre transcodeurs, d'un protocole (appelé protocole TFO) qui utilise une signalisation intra-bande (ou « in-band » en anglais), après établissement de l'appel, le but de cette signalisation intra-bande étant notamment de négocier un mode de codage commun pour les deux mobiles concernés.

Une fois le mode TFO activé, de la parole compressée peut alors être échangée entre transcodeurs dans des trames appelées trames TFO, elles-mêmes transportées dans des sous-canaux à un débit sous-multiple de 64 kbit/s. Par exemple, dans le cas du mode de codage plein débit (FR), la parole compressée est transportée dans des sous-canaux à 16 kbit/s définis par les deux bits de poids les plus faibles des échantillons de parole codés à 64kbit/s. Par exemple encore, dans le cas du mode de codage demi- débit (HR), la parole compressée est transportée dans des sous-canaux à 8 kbit/s définis par le bit de poids le plus faible des échantillons de parole codés à 64kbit/s. En outre, pour faciliter l'interruption du mode TFO, les bits de poids fort des échantillons de parole PCM à 64 kbit/s, correspondant à de la parole non compressée, sont transmis inchangés. Pour une description plus complète de la fonctionnalité TFO, on pourra se reporter notamment à la spécification 3GPP TS 28.062 publiée par le 3GPP (« 3rd Generation Partnership Project »).

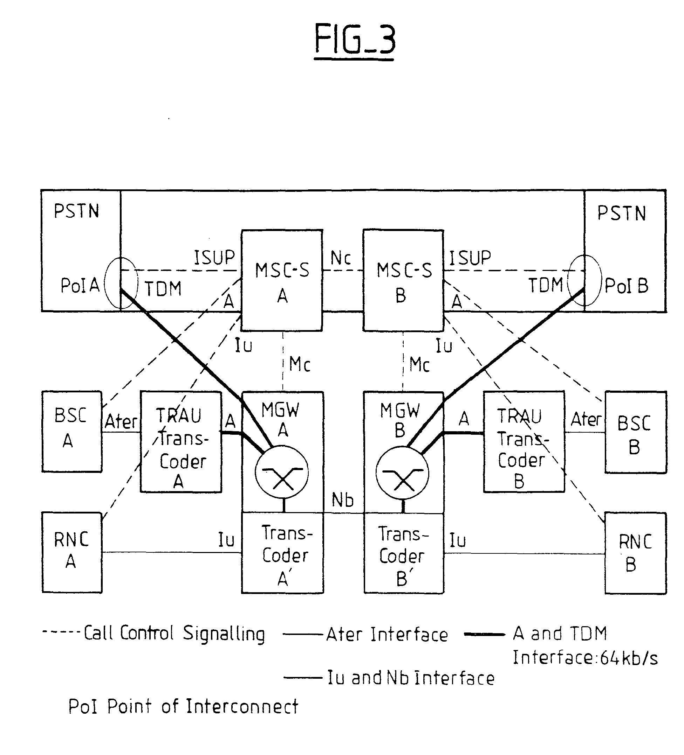

Comme rappelé sur la figure 3, dans une architecture de type NGN (« Next Generation Network »), selon la version R4 de la norme, les entités de type MSC telles que rappelées en relation avec les figures 1 et 2 sont remplacées par deux types d'entités, d'une part des entités de type MGW (pour « Media Gateway ») en charge principalement des fonctions de transport de données utilisateur, et d'autre part des entités de type S-MSC (pour « Serving MSC ») en charge principalement des fonctions de contrôle.

Le concept de NGN inclut notamment les caractéristiques suivantes:
- la technologie de transport pour le plan utilisateur dans le réseau coeur, sur l'interface « Nb » entre entités MGW (par exemple les entités notées MGW A et MGW B sur la figure 3) est une technologie orientée paquet, telle que notamment la technologie ATM (« Asynchronous Transfer Mode »), avec les protocoles AAL2/ATM (où AAL2 est utilisé pour « ATM Adaptation Loyer type 2 ») ou la technologie IP (« Internet protocol »), avec les protocoles RTP/IP où RTP est utilisé pour « Real Time Protocol »,
- le plan de contrôle entre MSC serveurs utilise le concept de BICC (« Bearer Independent Call Control »).

Une option dans le concept de BICC (appelée OoBTC, pour « Out of Band Transcoder Control ») autorise le plan de contrôle à négocier, avant établissement de l'appel, hors bande (ou « out-of-band » en anglais) un mode de codage de bout en bout (ou « end-to-end » en anglais) pour le plan utilisateur. Comme la technologie paquet pour le transport permet de transporter de la parole compressée directement sur un support paquet, il en résulte que de la parole compressée peut être transportée de bout en bout entre deux mobiles, sans qu'aucun transcodeur soit nécessaire. Ce mode est aussi appelé TrFO (« Trancoder Free Operation »). Pour une description plus complète de la fonctionnalité TrFO, on pourra se reporter notamment à la spécification 3GPP TS 23.153.

Le mode TrFO, comme le mode TFO, permet d'éviter des dégradations de qualité de parole en évitant des transcodages successifs dans le plan utilisateur. Mais le mode TrFO a aussi l'avantage d'économiser des ressources de transmission dans le réseau coeur, ce que ne permet pas le mode TFO.

Il est prévu que l'architecture de réseau coeur (incluant le réseau coeur des réseaux mobiles ou PLMNs de deuxième et de troisième génération, mais aussi les réseaux fixes utilisés par les PLMNs comme réseaux de transit) évolue de plus en plus vers l'architecture NGN.

Il est cependant prévu qu'il ne sera pas possible de déployer la fonctionnalité TrFO totalement dans ces réseaux, notamment dans les cas suivants :
- dans le cas d'accès de type GSM, le mode de codage utilisé n'est pas communiqué au réseau coeur ; donc même si le réseau peut utiliser la possibilité de négociation hors bande, le seul mode de codage dont le réseau coeur peut disposer est le mode par défaut, à savoir le mode PCM (G. 711),
- dans le cas de réseaux de transit qui n'utilisent pas l'architecture NGN (par exemple dans le cas de réseaux de transit correspondant au réseau PSTN (« Public Switched Telephone Network »),
- dans le cas de réseaux de transit qui utilisent l'architecture NGN mais qui n'utilisent pas l'option de négociation de mode de codage hors bande.

Pour ces raisons, on peut s'attendre à ce que les deux technologies, TFO et TrFO, soient utilisées conjointement, pendant longtemps encore, la technologie TFO étant utilisée dans des segments de réseau coeur qui ne bénéficient pas de la technologie TrFO, le protocole TFO étant activé après établissement de l'appel seulement si des transcodeurs sont insérés sur le trajet des données utilisateur.

Dans ce contexte, la présente invention reconnaît que certains problèmes se posent, qui peuvent être exposés par exemple de la manière suivante.

Sur un segment de réseau coeur sur lequel la technologie TrFO n'est pas disponible et qui utilise comme technologie de transport la technologie paquet (par exemple entre deux MSC de deuxième génération qui ont évolué vers l'architecture NGN) la technologie TFO conduit, comme rappelé précédemment, à transporter des trames TFO dans des sous-canaux à 16 kbit/s ou 8 kbit/s définis par deux ou un des huit bits formant les échantillons codés à 64kbit/s, ces échantillons codés étant eux-mêmes transmis via les couches de protocole AAL2/ATM. Comme le mode TFO utilise seulement deux ou un des huit bits formant un échantillon codé pour transporter de la parole compressé, il en résulte un gaspillage de la bande passante utilisée sur le segment de réseau coeur considéré.

La présente invention a notamment pour but de résoudre de tels problèmes et/ou d'éviter de tels inconvénients. Plus généralement, un des buts de la présente invention est d'optimiser le transport dans ces réseaux, notamment en termes d'utilisation de ressources de transport disponibles et d'amélioration de qualité de la parole.

Un des objets de la présente invention est un procédé pour le transport de parole compressée en mode paquet dans le réseau coeur d'infrastructures de communication avec des mobiles, sur un segment de réseau coeur incluant une paire de transcodeurs équipés pour fonctionner selon un mode dit sans double transcodage permettant de transporter de la parole compressée sur ledit segment, lesdits transcodeurs étant prévus pour mettre la parole compressée dans un format dit premier format incluant des données de parole compressée et des données de parole non compressée, procédé dans lequel, pour un transport optimisé en mode paquet sur tout ou partie dudit segment, ledit premier format est changé en un deuxième format incluant seulement des données de parole compressée.

Un autre objet de la présente invention est un noeud de réseau coeur pour infrastructures de communication avec des mobiles, comportant des moyens pour mettre en oeuvre un tel procédé.

D'autres objets et caractéristiques de la présente invention apparaîtront à la lecture de la description suivante d' exemples de réalisation, faite en relation avec les dessins ci-annexés dans lesquels:
- les figures 1 et 2 rappellent l'architecture de réseau avant la version R4 de la norme, respectivement pour le GSM et pour l'UMTS,
- la figure 3 rappelle l'architecture de réseau NGN après la version R4 de la norme,
- les figures 4, 5 et 6 sont des exemples destinés à illustrer les principes de la présente invention.

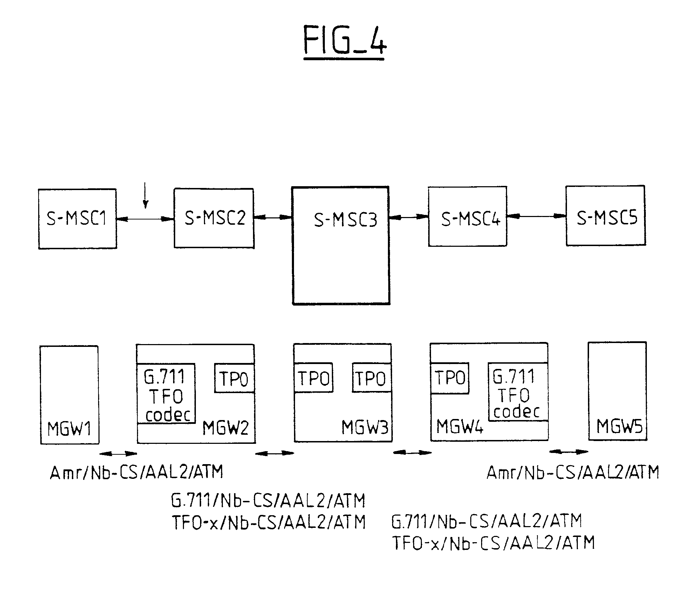

En référence à la figure 4, on considère à titre d'exemple les entités notées respectivement MGW1 à MGW5 (où MGW est utilisé pour « Media Gateway »), ces entités correspondant à des noeuds de réseau coeur, permettant de transporter en mode paquet (par exemple selon la technologie ATM) des données utilisateur (telles que notamment de la parole), et étant associées à des entités notées respectivement S-MSC1 à S-MSC5 (où S-MSC- est utilisé pour « Serving MSC »), comme rappelé dans ce qui précède.

On considère à titre d'exemple le cas où les entités MSC-S2, MSC-S3 et MSC-S3 ne sont pas équipées pour supporter la fonctionnalité TrFO, et où par conséquent une paire de trancodeurs doit être insérée sur le segment MGW2 - MGW3 - MGW4, ces transcodeurs étant en l'occurrence prévus respectivement dans les noeuds MGW2 et MGW4.

Les transcodeurs sont en l'occurrence notés « G.711 TFO codec » pour indiquer qu'ils permettent de passer d'un mode de codage avec compression de la parole à un mode de codage sans compression de la parole correspondant au mode PCM tel que défini dans la recommendation ITU-T G.71 1, et qu'il supportent la fonctionnalité TFO telle que défini dans les recommendations GSM et UMTS.

Dans l'exemple illustré sur la figure 4 , la parole transportée en dehors du segment MGW2 - MGW3 - MGW4 correspond à de la parole compressée codée selon le mode AMR. La parole compressée selon le mode AMR est elle-même encapsulée dans un protocole d'encapsulation (dit « framing protocol » en Anglais), qui peut être le protocole Nb-CS en environnement UMTS/GSM, ou qui pourrait etre différent dans d' autres environnements réseaux (ITU 1.366.2 ou IETF AVT par exemple) les paquets Nb-CS/amr ainsi obtenus sont eux mêmes transportés dans des paquets ou cellules ATM, selon les protocoles de transport AAL2/ATM, l'ensemble de ces traitements étant noté AMR/Nb-CS/AAL2/ ATM.

Dans l'exemple illustré sur la figure 4 , la parole transportée sur le segment MGW2 - MGW3 - MGW4, lorsque le mode TFO n'est pas activé, correspond à de la parole non compressée codée selon le mode PCM (G.711)., Les échantillons PCM (G.711) à 64 kbit/s sont eux-mêmes encapsulés dans un protocole d'encapsulation comme indiqué précédemment. Les paquets G.711/Nb-CS ainsi obtenus sont eux-mêmes transportés dans des paquets ou cellules ATM selon les protocoles de transport AAL2/ATM, l'ensemble de ces traitements étant noté G.711/Nb-CS/AAL2/ATM.

Dans l'exemple illustré sur la figure 4, la présente invention propose d'introduire, dans chacun des noeuds du segment considéré MGW2 - MGW3 - MGW4, une nouvelle fonctionnalité appelée dans ce qui suit TPO (pour « TFO Packet Optimizer »). Dans l'exemple illustré sur la figure 4, une entité TPO est ainsi prévue dans chacun de ces noeuds, à chaque terminaison d'une connexion entre deux noeuds.

Dans l'exemple illustré sur la figure 4 , la fonctionnalité TPO permet de faire en sorte que, lorsque le mode TFO est activé, la parole transportée sur le segment MGW2 - MGW3 - MGW4 corresponde à de la parole compressée, transportée dans un format correspondantpar exemple à des trames TFO-2, ou plus généralement à des trames TFO-x, où « x » indique le nombre de bits correspondant à de la parole compressée dans un échantillon codé à 64 kbit/s, avec « x » entier compris entre 1 et 7, et ayant généralement l'une des valeurs 1 ou 2 (le débit de la parole compressée n'excèdant généralement pas 16 kbit/s). Les trames TFO-x sont elles-mêmes encapsulées dans un protocole d'encapsulation (par exemple Nb-CS en environnement 3GPP, ou autre protocole en environnement fixe par exemple). Les paquets TFO-x/Nb-CS ainsi obtenus sont eux-mêmes transportés dans des paquets ou cellules ATM selon les protocoles de transport AAL2/ATM, l'ensemble de ces traitements étant noté TFO-x/Nb-CS/AAL2/ ATM.

En d'autres termes, dans l'exemple illustré sur la figure 4, pour un transport optimisé en mode paquet sur tout le segment considéré MGW2-MGW3-MGW4, un premier format incluant des données de parole compressée et des données de parole non compressées est changé en un deuxième format incluant seulement des données de parole compressée. Dans cet exemple, ledit premier format correspond à des échantillons codés incluant « x » bits de parole compressée et « n-x » bits de parole non compressée (où « n » désigne le nombre de bits de ces échantillons), et ledit deuxième format correspond à des échantillons codés incluant seulement « x » bits de parole compressée.

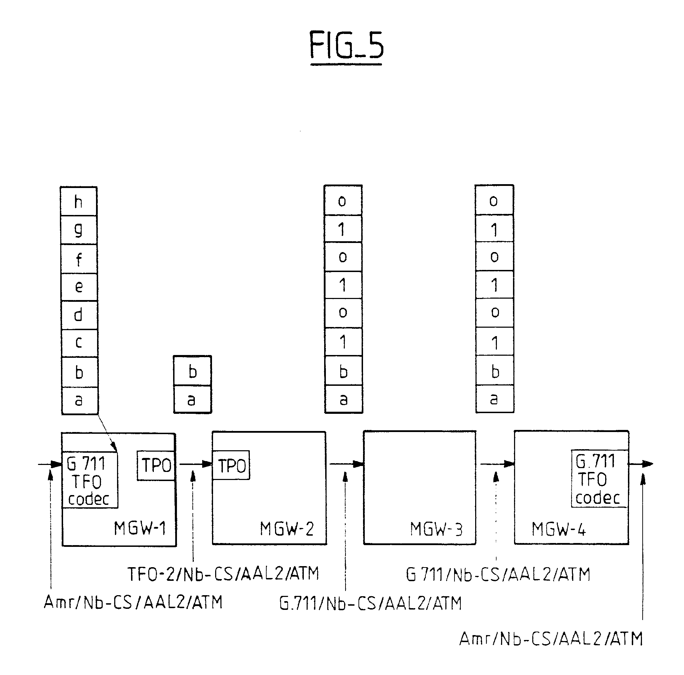

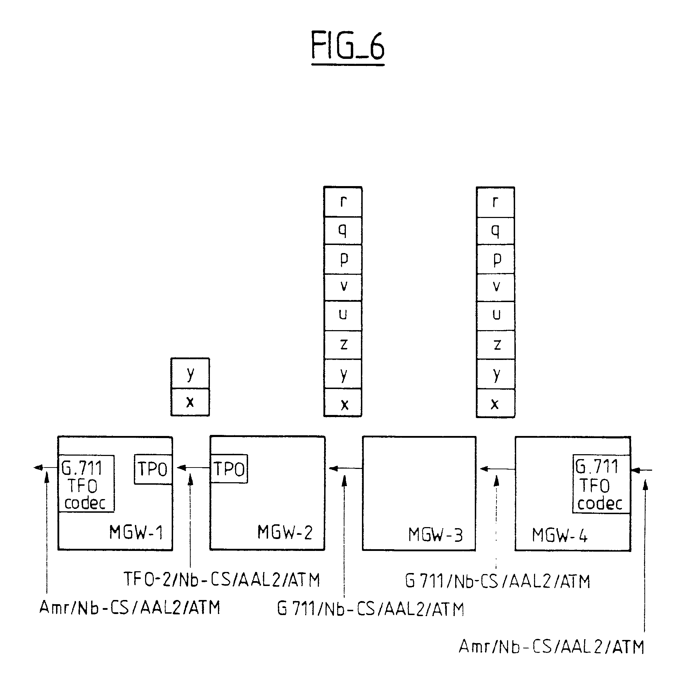

On indique ci-après certaines fonctions ou propriétés de la fonctionnalité TPO, dans les exemples illustrés :
- La fonctionnalité TPO est une fonctionnalité liée au transport et n'a pas nécessairement besoin d'être connue au niveau de la couche de contrôle.
- Une entité TPO doit être prévue à chaque extrémité d'une connexion entre deux noeuds pour que la fonctionnalité TPO soit active. Les entités TPO prévues aux extrémités d'une connexion sont aussi appelées entités homologues (pour la fonctionnalité TPO).
- Un noeud MGW peut avoir une entité TPO prévue à chacune de ses extrémités. Un noeud MGW peut aussi avoir une entité TPO prévue à une de ses extrémités (l'entité MGW homologue supportant la fonctionnalité TPO) et non prévue à l'autre de ses extrémités (l'entité MGW homologue ne supportant la fonctionnalité TPO). Différents cas possibles seront décrits en relation avec les figures 5 et 6.
- La capacité à mettre en oeuvre la fonctionnalité TPO entre deux noeuds pourra etre statique (chaque noeud, par configuration prélable ou « provisionning », sait pour chaque noeud adjacent si celui ci a la capacité TPO) ou dynamique (une « négociation TPO » entre deux noeuds se fait par exemple au travers du protocole de contrôle du transport comme par exemple Q.2630 ou IPBCP). En d'autres termes, un noeud MGW est capable de reconnaître si le noeud suivant est équipé pour traiter des données de parole dans ledit deuxième format, soit par configuration préléable, soit au moyen de protocole de signalisation, pour chaque appel.
- La fonctionnalité TPO est indépendante du protocole d' encapsulation (« framing protocol ») utilisé pour transporter les données sur le réseau de transport paquet. Par exemple, dans le cas du protocole Nb-CS, dans lequel est prévue une procédure d'initialisation permettant de fixer la taille des blocs de données pouvant être échangés selon ce protocole, les tailles de blocs de données possibles (indiquées au moyen d'un paramètre appelé RFCI, pour (« RFC Indicator », où RFC est utilisé pour « RAB sub Flow Combination ») pourront prendre en compte la fonctionnalité TPO. Dans l'exemple considéré, ces tailles pourront par exemple prendre jusqu'à sept valeurs possibles (correspondant aux sept valeurs possibles pour le paramètre « x »). Par exemple encore, suivant le protocole 1.366.2, un nouveau profil pourra être défini pour prendre en compte la fonctionnalité TPO, incluant huit possibilités : G.711, TFO-x (avec « x » compris entre 1 et 7).
- La fonctionnalité TPO est indépendante des codeurs voix utilisés.
- Une entité TPO inclut des fonctions de synchronisation/dé-synchronisation.

A l'établissement d'une communication, une entité TPO prévue dans un noeud donné démarre dans un mode « transparent » dans lequel elle re-transmet les données qu'elle reçoit soit d'un transcodeur « G.711 TFO codée » (si un tel transcodeur est prévu dans le noeud considéré, ce qui est par exemple le cas du noeud MGW1 sur la figure 5), soit d'une entité TFO dans un autre noeud (ce qui est par exemple le cas du noeud MGW2 sur la figure 6, qui reçoit lesdites données d'une entité TFO située dans le noeud MGW4). Parallèlement, l'entité TPO considérée détecte si un mode de codage TFO-x est négocié, et si oui recherche le motif de synchronisation de trame des trames TFO-x. Lorsque l'entité TPO réussit à se synchroniser, elle passe dans un autre mode dans lequel elle transmet seulement les données transportées dans les trames TFO-x. En d'autres termes, l'entité TPO passe dans un autre mode dans lequel ledit premier format est changé en deuxième format. Ce passage dans un autre mode est indiqué à l'entité TPO homologue, naturellement paquet par paquet dans l'en-tête (ou « header ») du protocole d' encapsulation (ou « framing protocol ») ». Ensuite, dans le cas où l'entité TPO considérée ne réussit plus à se synchroniser sur les trames TFO-x, elle retourne au mode G.711 initial, ce qui est églament indiqué à l'entité TPO homologue.
- Une entité TPO peut également inclure des fonctions de changement de format vers un troisième format incluant des données de paole compressée et des données non significatives. Un tel changement de format est effectué dans le cas où le noeud suivant n'est pas équipé pour supporter la fonctionnalité TPO. Dans l'exemple considéré, ledit troisième format correspond à des échantillons codés incluant « x » bits de parole compressée et « n-x » bits non significatifs.

Dans les exemples illustrés sur les figures 5 et 6, on considère par exemple un segment MGW1- MGW2 - MGW3 - MGW4, avec des transcodeurs prévus dans les noeuds MGW1 et MGW4, et on considère par exemple le cas où les noeuds MGW1, MGW2 et MGW4 supportent la fonctionnalité TPO, et où le noeud MGW3 ne supporte pas la fonctionnalité TPO.

Dans l'exemple illustré sur la figure 5, on considère plus particulièrement le sens de transmission de MGW1 vers MGW4, et dans l'exemple illustré sur la figure 6 on considère plus particulièrement le sens de transmission de MGW4 vers MGW1.

Dans l'exemple de la figure 5, le fonctionnement peut par exemple être le suivant.

Le transcodeur « G711 TFO codec » prévu dans le noeud MGW1 démarre tout d'abord en mode G.711 et négocie un mode de codage compatible avec l'entité homologue dans le noeud MGW4, au moyen d'une signalisation intra-bande (utilisant en l'occurrence une technique de vol de bits dans les échantillons de parole codés selon le codage PCM).

Si la négociation réussit, le mode TFO est activé, et le transcodeur passe alors dans un mode « TFO-x » selon lequel les échantillons de parole codés comportent, comme illustré sur la figure 5 pour le cas où « x » est égal à 2 :
- deux bits de poids faible, en l'occurrence les bits notés « a » et « b », correspondant à de la parole compressée,
- six bits de poids forts, en l'occurrence les bits notés « c » à « h », correspondant aux bits de poids fort d'un échantillon de parole PCM.

Avant activation du mode TFO, l'entité TPO prévue dans le noeud MGW1 re-transmet les échantillons PCM qu'elle reçoit du transcodeur, et recherche dans la signalisation échangée selon le protocole TFO, le mode « TFO-x » négocié. Dans l'exemple considéré où il s'agit du mode « TFO-2 », l'entité TPO cherche alors à se synchroniser sur les trames TFO-2 reçues du transcodeur, puis, une fois la synchronisation acquise, elle omet les bits « c » à « h » des échantillons de parole codés fournis par le transcodeur, et génère des paquets (appelés aussi paquets TFO-2) uniquement à partir des bits « a » et « b » de ces échantillons, à destination de l'entité TPO du noeud suivant MGW2.

Le noeud MGW2 détecte que le noeud suivant MGW3 n'est pas équipé pour supporter la fonctionnalité TPO, et, génère, à partir des échantillons (formés des bits « a » et « b ») reçus de MGW2, des échantillons comportant, comme illustré sur la figure 5 :
- deux bits de poids faible, en l'occurrence les bits notés « a » et « b », correspondant à de la parole compressée,
- six bits de poids forts non significatifs, par exemple les bits « 101010 ».

Le noeud MGW3, non équipé pour supporter la fonctionnalité TPO, se comporte un noeud classique, et re-transmet les échantillons de parole reçus du noeud MGW2, vers le noeud MGW4.

Dans le noeud MGW4, le transcodeur « G.711 TFO codec », synchronisé sur les trames TFO-2, peut extraire les bits « a » et « b » correspondant à de la parole compressée, et peut alors retransmettre la parole compressée (selon le mode AMR dans l'exemple illustré) au noeud suivant (non illustré).

Dans l'exemple de la figure 6, le fonctionnement peut par exemple être le suivant.

Le transcodeur « G.71 TFO codec » prévu dans le noeud MGW4 a connaissance de l'activation du mode TFO (au moyen de la signalisation échangée selon le protocole TFO). Cependant, comme le noeud suivant MGW3 n'est pas équipé pour supporter la fonctionnalité TPO, même après activation du mode TFO, le noeud MGW4 fournit des échantillons de parole PCM selon la recommendation G.711 comportant, comme illustré sur la figure 6 :
- deux bits de poids faible, en l'occurrence les bits notés « x » et « y », correspondant à de la parole compressée,
- six bits de poids forts, en l'occurrence les bits notés « z », « u », « v », « p », « q », « r » correspondant aux bits de poids fort d'un échantillon de parole PCM.

Le noeud MGW3, non équipé pour supporter la fonctionnalité TPO, se comporte un noeud classique, et re-transmet les échantillons de parole reçus du noeud MGW4, vers le noeud MGW2.

Le noeud MGW2, équipé pour supporter la fonctionnalité TPO, détecte que le noeud suivant MGW1 est équipé pour supporter la fonctionnalité TPO, et que le mode TFO-2 est activé. Il génère alors des paquets (appelés aussi paquets TFO-2) uniquement à partir des bits « x » et « y » de ces échantillons de parole, à destination de l'entité TPO du noeud suivant MGW1.

Dans le noeud MGW1, le transcodeur « G.711 TFO codec », synchronisé sur les trames TFO-2, peut extraire les bits « x » et « y » correspondant à de la parole compressée, et peut alors retransmettre la parole selon le mode compressé (AMR) au noeud suivant (non illustré).

En d'autres termes, dans l'exemple illustré sur les figures 5 et 6, pour un transport optimisé en mode paquet sur une partie du segment considéré MGW1-MGW2-MGW3-MGW4 (ladite partie correspondant en l'occurrence à MGW1-MGW2) un premier format incluant des données de parole compressée et des données de parole non compressées est changé en un deuxième format incluant seulement des données de parole compressée. Dans l'exemple illustré sur la figure 5, sur une autre partie dudit segmant (ladite autre partie correspondant en l'occurrence à MGW2-MGW3-MGW4) ledit deuxième format est changé en troisième format incluant des données de parole compressée et des données non significatives. Dans les exemples illustrés sur les figures 4, 5, 6 :
- un noeud du segment considéré, recevant des données de parole dans ledit premier format, et détectant que le noeud suivant est équipé pour traiter des données de parole dans ledit deuxième format, effectue un changement de format, dudit premier format vers ledit deuxième format, pour transmission vers ledit noeud suivant,
- un noeud du segment considéré, recevant des données de parole dans ledit deuxième format, et détectant que le noeud suivant est équipé pour traiter des données de parole dans ledit deuxième format, re-transmet les dites données dans ledit deuxième format vers ledit noeud suivant,
- un noeud du segment considéré, recevant des données de parole dans ledit deuxième format, et détectant que le noeud suivant n'est pas équipé pour traiter des données de parole selon ledit deuxième format, effectue un changement de format dudit deuxième format vers un troisième format incluant des données de parole compressée et des données non significatives, pour transmission vers ledit noeud suivant.

En outre, bien que non illustré :
- un noeud du segment considéré, recevant des données de parole dans ledit troisième format, et détectant que le noeud suivant est équipé pour traiter des données de parole dans ledit deuxième format, pourrait effectuer un changement de format, dudit troisième format vers ledit deuxième format, pour transmission vers ledit noeud suivant.

En outre, dans ces exemples :
- un noeud du segment considéré détecte que des données de parole reçues sont dans ledit premier format, en détectant si le mode sans double transcodage est activé.

En outre, dans ces exemples :
- un noeud du segment considéré indique à au moins un noeud suivant dudit segment s'il effectue un changement de format dudit premier format vers ledit deuxième format, pour transmission vers ledit noeud suivant.

En outre, dans ces exemples :
- des blocs de données de parole étant encapsulées dans un protocole d'encapsulation pour un transfert entre noeuds de réseau coeur, un noeud indique à au moins un noeud suivant s'il effectue un changement de format, au moyen d'une indication de format desdits blocs de données, transmise selon ledit protocole d'encapsulation.

En outre, dans ces exemples :
- un noeud du segment considéré peut soit être configuré pour reconnaître si le noeud suivant vers lequel il transmet des données de parole est équipé pour traiter des données de parole dans ledit deuxième format, soit détecter si le noeud suivant vers lequel il transmet des données de parole est équipé pour traiter des données de parole dans ledit deuxième format, au moyen de protocole de signalisation pour chaque appel.

En outre, dans ces exemples :
- ledit premier format correspond à des échantillons codés incluant « x » bits de parole compressée et « n-x » bits de parole non compressée (où « n » désigne le nombre de bits de ces échantillons),
- ledit deuxième format correspondant à des échantillons codés incluant seulement « x » bits de parole compressée,
- ledit troisième format correspond à des échantillons codés incluant « x » bits de parole compressée et « n-x » bits non significatifs, où « n » désigne le nombre total de bits d'un échantillon codé.

En outre, dans ces exemples :
- ledit protocole d'encapsulation incluant une procédure d'initialisation permettant de fixer la taille des blocs de données pouvant être échangés selon ce protocole, les tailles de blocs de données possibles incluent les différentes valeurs possibles de « x ».

La présente invention a également pour objet un noeud de réseau coeur pour infrastructures de communication avec des mobiles, comportant des moyens pour mettre en oeuvre un tel procédé, c'est-à-dire comportant des moyens pour réaliser les différentes étapes d'un tel procédé, individuellement ou en combinaison.

La réalisation particulière de tels moyens ne présentant pas de difficulté particulière pour l'homme du métier, de tels moyens ne nécessitent pas d'être décrits ici de manière plus détaillée que ce qui a été fait précédemment, par leur fonction.

## Revendications

1. Procédé pour le transport de parole compressée en mode paquet dans le réseau coeur d'infrastructures de communication avec des mobiles, sur un segment de réseau coeur incluant une paire de transcodeurs équipés pour fonctionner selon un mode dit sans double transcodage perrmettant de transporter de la parole compressée sur ledit segment, lesdits transcodeurs étant prévus pour mettre la parole compressée dans un format dit premier format incluant des données de parole compressée et des données de parole non compressée, procédé dans lequel, pour un transport optimisé en mode paquet sur tout ou partie dudit segment, ledit premier format est changé en un deuxième format incluant seulement des données de parole compressée.

2. Procédé selon la revendication 1, dans lequel ledit premier format correspond à des échantillons codés incluant « x » bits de parole compressée et « n-x » bits de parole non compressée, où « n » désigne le nombre total de bits d'un échantillon codé, et ledit deuxième format correspond à des échantillons codés incluant seulement « x » bits de parole compressée.

3. Procédé selon l'une des revendications 1 ou 2, dans lequel un noeud dudit segment, recevant des données de parole dans ledit premier format, et détectant que le noeud suivant est équipé pour traiter des données de parole dans ledit deuxième format, effectue un changement de format, dudit premier format vers ledit deuxième format, pour transmission vers ledit noeud suivant.

4. Procédé selon l'une des revendications 1 ou 2, dans lequel un noeud dudit segment, recevant des données de parole dans ledit deuxième format, et détectant que le noeud suivant est équipé pour traiter des données de parole dans ledit deuxième format, re-transmet les dites données dans ledit deuxième format vers ledit noeud suivant.

5. Procédé selon l'une des revendications 1 ou 2, dans lequel un noeud dudit segment, recevant des données de parole dans ledit deuxième format, et détectant que le noeud suivant n'est pas équipé pour traiter des données de parole selon ledit deuxième format, effectue un changement de format dudit deuxième format vers un troisième format incluant des données de parole compressée et des données non significatives, pour transmission vers ledit noeud suivant.

6. Procédé selon la revendication 5, dans lequel un noeud dudit segment, recevant des données de parole dans ledit troisième format, et détectant que le noeud suivant est équipé pour traiter des données de parole dans ledit deuxième format, effectue un changement de format, dudit troisième format vers ledit deuxième format, pour transmission vers ledit noeud suivant.

7. Procédé selon l'une des revendications 5 ou 6, dans lequel ledit troisième format correspond à des échantillons codés incluant « x » bits de parole compressée et « n-x » bits non significatifs, où « n » désigne le nombre total de bits d'un échantillon codé.

8. Procédé selon l'une des revendications 2 ou 7, dans lequel « n » est égal à 8, et « x » est compris entre 1 et 7.

9. Procédé selon l'une des revendications 1 à 8, dans lequel un noeud dudit segment détecte que des données de parole reçues sont dans ledit premier format, en détectant si le mode sans double transcodage est activé.

10. Procédé selon l'une des revendications 3 à 9, dans lequel un noeud dudit segment indique à au moins un noeud suivant dudit segment s'il effectue un changement de format dudit premier format vers ledit deuxième format, pour transmission vers ledit noeud suivant.

11. Procédé selon la revendication 10, dans lequel, des blocs de données de parole étant encapsulées dans un protocole d'encapsulation pour un transfert entre noeuds de réseau coeur, un noeud indique à au moins un noeud suivant s'il effectue un changement de format, au moyen d'une indication de format desdits blocs de données, transmise selon ledit protocole d'encapsulation.

12. Procédé selon les revendications 2 et 11, dans lequel, ledit protocole d'encapsulation incluant une procédure d'initialisation permettant de fixer la taille des blocs de données pouvant être échangés selon ce protocole, les tailles de blocs de données possibles incluent les différentes valeurs possibles de « x ».

13. Procédé selon l'une des revendications 3 à 12, dans lequel un noeud dudit segment est configuré pour reconnaître si le noeud suivant vers lequel il transmet des données de parole est équipé pour traiter des données de parole dans ledit deuxième format.

14. Procédé selon l'une des revendications 3 à 12, dans lequel un noeud dudit segment détecte si le noeud suivant vers lequel il transmet des données de parole est équipé pour traiter de la parole dans ledit deuxième format, au moyen de protocole de signalisation pour chaque appel.

15. Noeud de réseau coeur pour infrastructures de communication avec des mobiles, comportant des moyens pour mettre en oeuvre un procédé selon l'une des revendications 1 à 14.
